# FASCICULE DE BREVET EUROPEEN

(11) **EP 2 151 725 B1**
(45) Date de publication et mention de la délivrance du brevet: **29.05.2013**
(21) Numéro de dépôt: 09167339.2
(22) Date de dépôt: 06.08.2009
(51) Int. Cl.: G05B 19/406

(54) **Procédé et dispositif de détection précise du contact d'un outil tournant et d'une pièce usinée par l'outil**
Verfahren und Vorrichtung zur präzisen Erkennung des Kontakts eines Drehwerkzeugs und eines durch dieses Werkzeug bearbeiteten Werkstücks
Method and device for accurately detecting contact between a rotating tool and a part machined by the tool

(30) Priorité: 06.08.2008 FR 0804491
(43) Date de publication de la demande: 10.02.2010
(73) Titulaire: Forest Line Albert, 75017 Paris (FR)
(72) Inventeur: Jerome, Gaëtan, 80420, Flixecourt (FR); Leseur, Jack, 80300, Mesnil-Martinsart (FR); Mattei, Ludovic, 80300, Albert (FR)
(74) Mandataire: Bertrand, Didier

(56) Documents cités:
- EP-A- 1 197 819
- FR-A- 2 577 456
- FR-A- 2 729 770
- US-A1- 2006 159 537

## Description

La présente invention concerne l'usinage de pièces par un outil tournant, notamment une électrobroche d'usinage tournant à grande vitesse.

Une électrobroche d'usinage est connue par exemple par les documents FR 2 500 776 ou WO 97/30820. Ces machines sont associées à des commandes de pilotage selon des axes classiques de translation en X, Y, Z et de rotation en A et B et permettent d'atteindre généralement une précision de l'ordre de quelques dizaines de micromètres, par exemple 30 micromètres, pour des machines de grandes dimensions (courses supérieures à 1,5 m).

Dans le cadre de la reprise d'usinage en superfinition, et notamment lors de reprise d'usinage avec outil frère impliquant un défaut de repositionnement dans la broche, il est souhaitable d'améliorer encore la précision, et donc de connaître avec la plus grande précision possible l'accostage de l'outil tournant sur la pièce, et ce même quand la rotation de l'outil tournant et ses déplacements à grande vitesse peut entraîner des déplacements axiaux de broche.

Le document US 2003/002943 fait connaître un dispositif destiné à détecter avec précision l'accostage de l'outil fixe sur la pièce, du type selon lequel on repère la modification d'un phénomène, notamment électrique ou acoustique, intervenant lors de l'accostage de l'outil sur la pièce. Cependant ce dispositif utilise un potentiel positif présent sur toute la structure de la machine.

On connaît aussi par le document EP 1 197 819 un dispositif qui présente les caractéristiques du préambule de la revendication 1 annexée. L'outil est isolé directement de l'arbre d'électrobroche dans lequel il est monté par une couche d'isolant. L'information électrique est collectée par des moyens non représentés en détail directement sur l'outil et qui sont probablement du type à balai frotteur. Cet agencement donne peut-être satisfaction pour des outils tournant à faible vitesse mais pas pour des outils travaillant à grande vitesse comme les envisage la présente invention. En effet, l'information donnée par le collecteur à balai n'est pas fiable à grande vitesse et par ailleurs l'isolation placée entre l'outil et l'arbre induit une incertitude quant à la position exacte de l'outil.

US 2006/0159537 montre un dispositif de détection où l'information électrique de changement d'état est captée sur l'outil lui-même.

L'invention vise à remédier à ces inconvénients et à trouver une solution permettant un accostage précis, notamment dans les outils tournant à grande vitesse.

L'invention atteint son but grâce à un dispositif conforme à la revendication 1 annexée.

Très avantageusement, le premier potentiel est la terre, de sorte que le corps et la pièce et son porte-pièce ne sont portés à aucun potentiel, contrairement à des dispositifs de l'art antérieur.

Selon un premier mode de réalisation, le collecteur comprend un roulement conducteur électrique, de préférence en acier.

Selon une première variante du premier mode de réalisation, le collecteur est mis à un second potentiel électrique par l'intermédiaire d'un circuit de détection de passage de courant qui constitue le circuit de mesure, moyennant quoi le contact est caractérisé par la détection d'un changement du courant passant dans ledit circuit.

Ce changement d'état du courant dans le circuit détecteur peut correspondre à un changement binaire de passage de courant à absence de passage de courant. Par exemple, dans un montage pratique avec mise à la masse (premier potentiel nul), la carte installée sur la machine détecte un manque de courant dans le circuit de mesure : lors de l'accostage, le courant

En pratique, la pièce peut être mise au premier potentiel électrique (et notamment à la terre) par l'intermédiaire du porte-pièce qui est électriquement conducteur et est mis à ce dit premier potentiel.

Le grand avantage de l'invention est de réaliser le captage de l'information électrique de potentiel à l'arrière de la broche, sur l'arbre d'électrobroche, sur une partie de relativement faible diamètre à l'aide d'un palier, conducteur ou non, de relativement petites dimensions. Les rotations utilisées en usinage grande vitesse sont compatibles avec cette disposition.

L'invention concerne également un procédé d'accostage précis d'un outil tournant d'usinage d'une pièce sur un porte-pièce, selon lequel on utilise un dispositif tel que ci-dessus.

Selon une caractéristique avantageuse, dans une première étape on amène l'outil dans le voisinage immédiat de la pièce, et dans une deuxième étape on avance l'outil par pas très petits en détectant avec le circuit de mesure l'accostage, en réitérant d'un pas chaque fois qu'aucun accostage n'est détecté, jusqu'à l'accostage indiqué par le circuit de mesure.

D'autres caractéristiques et avantages de l'invention ressortiront de la description suivante de plusieurs exemples de réalisation. Il sera fait référence aux dessins annexés sur lesquels :
La figure 1 est une vue schématique d'une machine d'usinage de type électrobroche et de la pièce à usiner, ainsi que du circuit électrique associé au procédé et au dispositif de détection qui ne rentre pas dans le cadre de l'invention.
La figure 2 est une vue schématique d'une seconde machine d'usinage de type électrobroche et de la pièce à usiner, ainsi que du circuit électrique associé au procédé et au dispositif de détection qui ne rentre pas dans le cadre de l'invention, la figure 2A représentant le schéma électrique correspondant à la configuration de ces éléments.
La figure 3 est une vue schématique d'une machine d'usinage de type électrobroche et de la pièce à usiner, ainsi que du circuit électrique associé au procédé et au dispositif de détection de contact précise conforme à l'invention, la figure 3A représentant le schéma électrique équivalent.

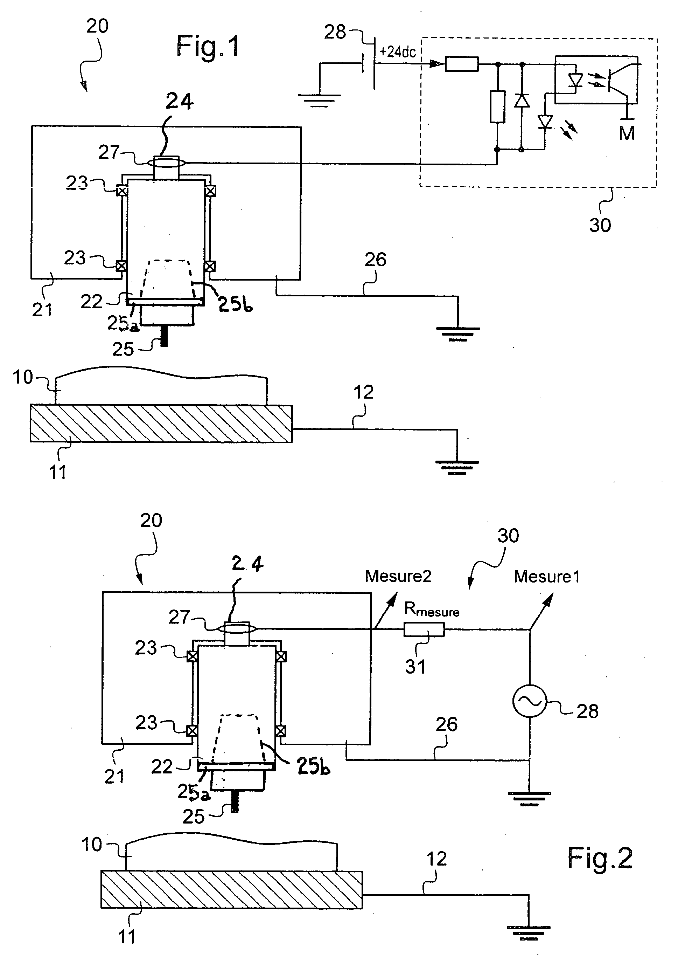

La figure 1 montre de manière très simplifiée une pièce à usiner 10 disposée sur une taque 11 massive en matériau conducteur de l'électricité, par exemple en acier ou en fonte.

L'électrobroche 20 est représentée de manière simplifiée par son corps 21 qui est supporté par une structure non représentée, de manière classique, par l'intermédiaire de portique , de chariot et de coulant, les déplacements relatifs par rapport à la pièce étant effectués par ledit support électrobroche et/ou le support de pièce suivant 5 axes. La broche tournante 22 est montée dans un logement approprié du corps 21 grâce à une paire de roulements 23 ici non conducteurs de l'électricité, par exemple en céramique. À l'arrière de la broche 22 tourne dans le corps 21 l'arbre d'électrobroche 24, dans des roulements non représentés sur cette figure. À l'avant de la broche 22, un logement permet d'accueillir le cône 25b d'un outil tournant 25 d'enlèvement de matière destinée à venir enlever la matière de la pièce 10, l'outil présentant une collerette 25a sensiblement de même taille que l'avant de la broche 22 et étant en appui rigide sur son cône par le système de serrage d'outil non représenté.

Un programme de commande pilote les mouvements de l'électrobroche 20 de manière à amener la pointe de l'outil 25 à suivre une trajectoire prédéterminée, d'abord hors usinage, l'outil s'approchant de la pièce, puis, une fois l'accostage de la pièce ayant été réalisé avec précision, en usinage, la pointe de l'outil enlevant effectivement de la matière de la pièce, enfin à nouveau hors usinage quand l'outil s'éloigne de la pièce à usiner.

L'invention s'intéresse tout particulièrement à la phase finale de l'approche de l'outil vers la pièce et à l'accostage.

Selon l'invention, il est prévu des moyens très précis de détection du contact et donc de l'accostage sur la pièce fondés sur la reconnaissance d'un phénomène électrique modifié quand l'outil entre en contact avec pièce.

Pour ce faire, la taque 11 est mise à la terre par un fil 12, et le corps 21 de l'électrobroche est lui-même mis à la terre par un fil 26. Le potentiel existant sur l'outil 21 et la broche 22 est repris à l'arrière de l'arbre d'électrobroche 24 par un conducteur roulant 27 (un roulement collecteur en acier) relié à une source de courant continu 28 au travers d'un circuit de détection 30 de courant, susceptible d'envoyer une information binaire sur le passage ou non d'un courant.

Lorsqu'aucun courant n'est détecté dans le circuit 30, c'est que l'outil 25 et la broche 22 sont encore à l'état isolé et donc hors de contact avec la pièce. En revanche, la détection de courant traduit la mise en continuité électrique entre l'outil 25 et la pièce 10 et donc que l'accostage a eu lieu.

Selon le procédé de conduite de l'outil de l'invention, le circuit de pilotage de la broche amène l'outil au voisinage immédiat de la pièce selon la trajectoire calculée. Par voisinage immédiat, on entend une distance de moins de quelques dixièmes de millimètre, et typiquement de l'ordre du dixième de millimètre, entre la position théorique d'accostage sur la pièce et la pointe de l'outil, aussi bien en Z qu'en XY. L'approche comprend le positionnement des axes rotatifs A et B.

Le reste de la course se fait ensuite par pas très petits, de préférence de moins de quelques micromètres, et typiquement de l'ordre du micromètre, vers la position théorique d'accostage. À chaque pas, on teste la conduction électrique détectée par le circuit 30. La durée de test est très courte et si le test marque qu'il n'y a pas conduction, on reprend la course pour le pas suivant où l'on répète ces opérations jusqu'à ce que le test marque qu'il y a conduction et que l'accostage a été réalisé. La précision de l'accostage est donc celle du pas choisi pour les mesures de test, donc typiquement un micromètre. Si chaque pas exige environ 500 ms, on voit que la course finale qui comporte de l'ordre de 100 pas, prendra 50 secondes pour s'exécuter. Le temps nécessaire est directement lié aux capacités du système de commande de la machine.

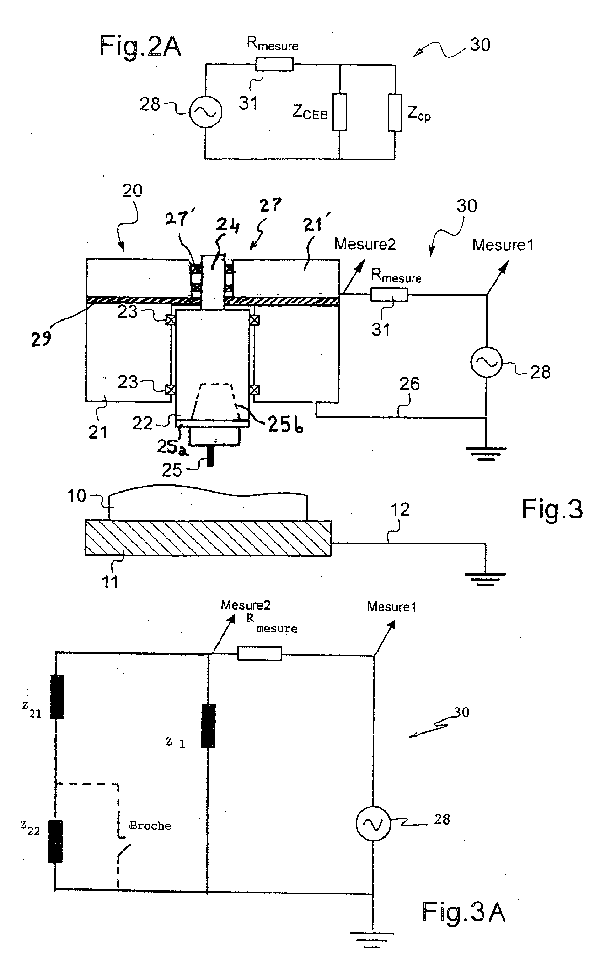

La figure 2 représente une variante . On y retrouve : la pièce 10 sur son porte-pièce conducteur 11 mis à la terre par un fil 12 ; et le corps 21 d'électrobroche 20 dans lequel tourne la broche 22 avec son arbre 24, pour entraîner en rotation l'outil 25, la broche 22 étant isolée du corps 21 par les paliers isolants 23, le corps étant mis à la terre par un fil 26, et un collecteur 27 étant placé à l'arrière de l'arbre 22. Le collecteur est relié à une source de tension alternative 28 par l'intermédiaire d'une résistance de mesure 31. La broche 22 isolée du corps 21 présente une impédance d'isolation Zceb, tandis que l'outil 25 présente avec la pièce 10 une impédance Zop qui est très grande quand l'outil 25 ne touche pas la pièce 10 et qui est nulle ou voisine de zéro dès que l'outil touche la pièce. De cette manière, il se forme entre ces divers éléments un circuit électrique de mesure 30 représentés sur la figure 2A où les impédances Zceb et Zop sont en parallèle. En mesurant la tension alternative sur la résistance de mesure 31, on détecte immédiatement une variation entre les deux états, liés à la différence d'impédance Zop.

Le mode de réalisation de la figure 3 qui représente l'invention reprend les mêmes éléments 20, 21,22, 23,24, 25, 25a, 25b, 26, 28, que la figure 2 avec le collecteur 27 à l'arrière qui est représenté d'une manière plus précise. Le corps 21 se prolonge à l'arrière par une pièce conductrice 21', isolée de la partie principale 21 par une couche d'isolation 29. L'arbre de broche 24 peut tourner dans la partie arrière de corps 21' grâce à des roulements 27', qui, dans ce mode de réalisation et contrairement à celui des figures 1 et 2, sont isolants et réalisés par exemple en céramique. Cette fonction de roulement isolant est avantageusement réalisée sans grande modification avec les joints tournants classiques d'injection d'air comprimé, de pulvérisation, ou d'arrosage par le centre de la broche. Il suffit alors d'isoler électriquement ce joint par rapport au corps 21 de l'électrobroche (ce qui est réalisé ici par l'isolation 29). Le circuit 30 reçoit son information par l'intermédiaire de la pièce conductrice 21' et des roulements 27'. Il n'y a donc pas de conductivité entre le capteur et la broche mais une certaine impédance. La figure 3A représente le circuit équivalent à la figure 3, où l'on désigne par Z₁ l'impédance entre la pièce arrière 21' et le corps 21, par Z₂₁ l'impédance entre la pièce arrière 21' et l'arbre de broche 24 et par Z₂₂ l'impédance entre la broche 24 et le corps 21. Ces trois impédances sont en théorie proches de condensateurs idéaux et caractérisées par une certaine réponse fréquentielle. Lors de l'accostage de la broche, l'impédance Z₂₂ est court-circuitée, ce qui crée une signature électrique au niveau du circuit équivalent, laquelle est récupérée via les mesures 1 et 2.

Un microprocesseur analyse les deux mesures. Grâce à un algorithme de traitement du signal poussé, il est capable de détecter le moindre contact outil pièce, tout en évitant de détecter les perturbations imputables au système.

Le microprocesseur envoie alors un signal à la commande d'axe qui interrompt l'approche.

Pour s'adapter à tout type de machine, le microprocesseur est configurable (fréquence d'analyse optimale, fréquence d'échantillonnage, seuil de détection de la variation d'impédance, taille du buffer pour le traitement du signal...).

Dans l'utilisation, le microprocesseur fait à la fois office de source et d'analyseur. Il n'envoie pas un signal alternatif sinusoïdal mais un signal carré 0-5V.

L'intérêt de l'invention sera illustré par l'exemple pratique suivant.

Comme il a été dit, l'invention est particulièrement destinée à l'usinage à grande vitesse avec une vitesse de rotation de l'ordre 10000 à 40 000 trs/min, utilisant des attachements d'outil respectivement de type HSK100 à HSK50. Dans une configuration pratique, le diamètre extérieur du roulement avant 23 peut être de 90 mm et son diamètre intérieur de 65 mm. Si l'attachement de l'outil 25 est de type HSK 63, la collerette 25b de l'outil 25 est de 63 mm, ce qui pour une vitesse de 30000 trs/min implique une vitesse circonférentielle au niveau de la collerette 25a de 100 m/s.

Selon l'invention, le collecteur placé sur l'arbre 24 à l'arrière de la broche permet d'utiliser un roulement collecteur de diamètres intérieur et extérieur de 10 et 26 mm et donc d'avoir une vitesse circonférentielle qui reste raisonnable malgré la vitesse élevée de l'outil.

L'invention permet la détection précise du contact de l'outil avec la pièce. Cette détection précise peut être utilisée pour repérer l'accostage de l'outil comme décrit ci-dessus. Dans une utilisation alternative, on peut repérer le bris d'outil sur la base de la disparition du signal électrique pour un outil à une arête de coupe ou un changement de fréquence pour un outil à plusieurs arêtes de coupe non engagées simultanément dans la matière.

Dans tous les modes de réalisation, il peut être opportun de soigneusement nettoyer les outils et la pièce dans la zone d'accostage afin d'éliminer les saletés qui risqueraient d'interférer avec la reconnaissance des phénomènes électriques mesurés.

Les solutions de nettoyage aux ultrasons de l'outil et de soufflage à travers la broche et l'outil pendant toute la phase d'accostage sont intéressantes.

## Revendications

1. Dispositif de détection précise du contact d'un outil tournant (25) d'usinage avec une pièce (10) sur un porte-pièce (11), l'outil (25) étant monté sur une broche (22) montée à rotation dans un corps (21) d'une électrabroche (21), la broche (22) était solidaire à sa partie arrière d'un arbre rotatif (24) et tournant dans une partie arrière (21') du corps (21) par des roulements (27'), le dispositif comprenant une liaison de la pièce (10) et du corps (21) à un premier potentiel électrique, une isolation électrique de l'outil (25) par des supports isolants (23), et un dispositif (30) de mesure d'un phénomène lié à la conduction électrique entre l'outil (25) et la pièce (10), un collecteur électrique (27) reliant l'outil (25) au dispositif de mesure (30) pour répercuter dans ledit dispositif de mesure une modification de phénomène électrique intervenant lors du contact de l'outil (25) avec la pièce (10), les supports isolants (23) étant disposés entre l'arbre (24) de l'électrobroche et le corps de l'électrobroche (21) et constitués par les roulements de la broche (22), **caractérisé en ce que** le collecteur (27) est formé par un roulement non conducteur (27') prévu sur l'arbre (24) de l'électrobroche à l'arrière de la broche (22), la partie arrière (21') du corps étant une pièce conductirce et isolée du reste du corps (21) par une isolation (29, et **en ce que** le collecteur (27) est relié à une source de tension alternative par l'intermédiaire d'un circuit (30) de détection d'impédance qui reçoit son information par l'intermédiaire de la pièce conductrice (21') et du roulement (27'), moyennant quoi l'accostage est **caractérisé par** la détection d'une variation de tension mesurée entre deux points du circuit.

2. Dispositif selon la revendication 1, **caractérisé en ce que** le premier potentiel est la terre.

3. Dispositif selon l'une quelconque des revendications 1 ou 2, **caractérisé en ce que** la pièce (10) est mise au premier potentiel électrique par l'intermédiaire du porte-pièce (11) qui est électriquement conducteur.

4. Dispositif selon l'une quelconque des revendications 1 à 3, **caractérisé en ce qu'**il est prévu des moyens d'injection de soufflage d'air comprimé à travers la broche et l'outil.

5. Dispositif selon la revendication 4, **caractérisé en ce que** ces moyens d'injection sont constitués par un joint tournant servant de collecteur (27).

6. Procédé d'accostage précis d'un outil tournant d'usinage d'une pièce sur un porte-pièce, **caractérisé en ce qu'**on utilise un dispositif selon l'une quelconque des revendications 1 à 5.

7. Procédé selon la revendication 6, **caractérisé en ce que** dans une première étape on amène l'outil (25) dans le voisinage immédiat de la pièce (10), et dans une deuxième étape on avance l'outil (25) par pas très petits en détectant avec le circuit de mesure (30) l'accostage, en réitérant d'un pas chaque fois qu'aucun accostage n'est détecté, jusqu'à l'accostage indiqué par le circuit de mesure.

## Patentansprüche

1. Vorrichtung zur präzisen Erkennung des Kontakts eines sich drehenden spanabhebenden Werkzeugs (25) mit einem Werkstück (10) auf einem Werkstückträger (11), wobei das Werkzeug (25) auf einer Spindel (22) angebracht ist, welche drehbeweglich in einem Korpus (21) einer Motorspindel (21) angebracht ist, wobei die Spindel (22) an ihrem hinteren Abschnitt fest mit einer drehbaren Welle (24) verbunden ist und sich in einem hinteren Abschnitt (21') des Korpus' (21) mittels Lagern (27') dreht, wobei die Vorrichtung eine Verbindung des Werkstücks (10) und des Korpus' (21) auf einem ersten elektrischen Potenzial, eine elektrische Isolierung des Werkzeugs (25) mittels isolierender Halter (23) und eine Vorrichtung (30) zum Messen eines mit der elektrischen Leitung zwischen dem Werkzeug (25) und dem Werkstück (10) in Verbindung stehenden Phänomens umfasst, wobei ein elektrischer Kollektor (30) das Werkzeug (25) an die Messvorrichtung (30) anschließt, um eine beim Kontakt des Werkzeugs (25) mit dem Werkstück (10) eintretende Veränderung des elektrischen Phänomens an diese Messvorrichtung weiterzugeben, wobei die isolierenden Halter (23) zwischen der Welle (24) der Motorspindel und dem Korpus der Motorspindel (21) angebracht sind und aus den Lagern der Spindel (22) bestehen, **dadurch gekennzeichnet, dass** der Kollektor (27) aus einem nicht leitenden Lager (27') gebildet wird, das auf der Welle (24) der Motorspindel im hinteren Abschnitt der Spindel (22) vorgesehen ist, wobei der hintere Abschnitt (21') des Korpus' ein leitendes Teil und vom Rest des Korpus' (21) durch eine Isolierung (29) isoliert ist, und dadurch, dass der Kollektor (27) über einen Schaltkreis (30) zur Erkennung der Impedanz an eine Wechselspannungsquelle angeschlossen ist, der seine Information mittels des leitenden Teils (21') und des Lagers (27') erhält, womit das Antasten des Werkstücks durch das Werkzeug durch die Erkennung einer Veränderung der zwischen zwei Punkten des Schaltkreises gemessenen Spannung bestimmt wird.

2. Vorrichtung nach Anspruch 1, **dadurch gekennzeichnet, dass** das erste Potenzial Erde ist.

3. Vorrichtung nach einem der Ansprüche 1 oder 2, **dadurch gekennzeichnet, dass** das Werkstück (10) mittels des Werkstückträgers (11), welcher elektrisch leitend ist, auf das erste elektrische Potenzial gelegt wird.

4. Vorrichtung nach einem der Ansprüche 1 bis 3, **dadurch gekennzeichnet, dass** Mittel zum Einblasen von Spül-Druckluft durch die Spindel und das Werkzeug vorgesehen sind

5. Vorrichtung nach Anspruch 4, **dadurch gekennzeichnet, dass** diese Mittel zum Einblasen aus einer drehbaren Durchführung bestehen, welche als Kollektor dient.

6. Verfahren zum präzisen Antasten eines sich drehenden spanabhebenden Werkzeugs zum Bearbeiten eines Werkstücks auf einem Werkstückträger, **dadurch gekennzeichnet, dass** eine Vorrichtung nach einem der Ansprüche 1 bis 5 verwendet wird.

7. Verfahren nach Anspruch 6, **dadurch gekennzeichnet, dass** das Werkzeug (25) in einer ersten Etappe in die unmittelbare Nähe des Werkstücks (10) gebracht wird, und dass das Werkzeug (25) in einer zweiten Etappe in sehr kleinen Schritten vorwärts bewegt wird, wobei das Antasten mit dem Mess-Schaltkreis detektiert wird, indem jedes Mal ein Schritt weitergegangen wird, wenn kein Antasten erkannt wurde, solange bis das Antasten durch den Mess-Schaltkreis angezeigt wird.

## Claims

1. Device for accurately detecting contact between a rotating machining tool (25) and a workpiece (10) on a workpiece carrier (11), the tool (25) being mounted on a spindle (22) which is rotatably mounted in a body (21) of an electro-spindle (21), the spindle (22) being integral at the rear portion thereof with a rotating shaft (24) and rotating in a rear portion (21') of the body (21) by means of bearings (27'), the device comprising a connection of the workpiece (10) and of the body (21) at a first electric potential, electrical insulation of the tool (25) by means of insulating supports (23) and a device (30) for measuring a phenomenon linked to the electrical conduction between the tool (25) and the workpiece (10), an electrical collector (27) connecting the tool (25) to the measuring device (30) in order to pass on to said measuring device a change in electrical phenomenon occurring upon contact of the tool (25) with the workpiece (10), the insulating supports (23) being arranged between the shaft (24) of the electro-spindle and the body of the electro-spindle (21) and composed of the bearings of the spindle (22), **characterised in that** the collector (27) is formed by a nonconductive bearing (27') provided on the shaft (24) of the electro-spindle at the rear of the spindle (22), the rear portion (21') of the body being a conductive part which is insulated from the rest of the body (21) by insulation (29), and **in that** the collector (27) is connected to an alternating voltage source via an impedance detection circuit (30) which receives its information via the conductive part (21') and the bearing (27'), as a result of which the docking is **characterised by** the detection of a voltage change which is measured between two points of the circuit.

2. Device according to claim 1, **characterised in that** the first potential is earth.

3. Device according to either claim 1 or claim 2, **characterised in that** the workpiece (10) is brought to the first electric potential by means of the workpiece carrier (11) which is electrically conductive.

4. Device according to any of claims 1 to 3, **characterised in that** injection means are provided for blowing compressed air through the shaft and the tool.

5. Device according to claim 4, **characterised in that** said injection means are composed of a rotating joint acting as the collector (27).

6. Method for accurately docking a rotating tool for machining a workpiece on a workpiece carrier, **characterised in that** use is made of a device according to any of claims 1 to 5.

7. Method according to claim 6, **characterised in that** the tool (25) is brought into the immediate vicinity of the workpiece (10) in a first step, and the tool is very gradually moved forwards at the same time as detecting the docking using the measuring circuit (30) in a second step, each slight forward movement being repeated each time docking is not detected, up to the docking indicated by the measuring circuit.
